# EUROPEAN PATENT SPECIFICATION

(11) **EP 0 527 190 B1**
(45) Date of publication and mention of the grant of the patent: **04.01.1995**
(21) Application number: 91909178.5
(22) Date of filing: 30.04.1991
(51) Int. Cl.: H04B 3/14, H04B 7/005, H04L 25/03

(54) **A METHOD OF EQUALIZATION IN A RECEIVER OF SIGNALS HAVING PASSED A TRANSMISSION CHANNEL**
ENTZERRUNGSMETHODE IN EINEM EMPFÄNGER FÜR EINEN ÜBERTRAGUNGSKANAL DURCHLAUFENDE SIGNALE
PROCEDE D'EGALISATION DANS UN RECEPTEUR DE SIGNAUX AYANT PASSE UN CANAL DE TRANSMISSION

(30) Priority: 01.05.1990 DK 1076/90
(43) Date of publication of application: 17.02.1993
(73) Proprietor: DANCALL TELECOM A/S, DK-9490 Pandrup (DK); CETELCO A/S, DK-9530 Stovring (DK)
(72) Inventor: MADSEN, Benny, DK-9000 Aalborg (DK); BRINK, Stig, Blücher, DK-9000 Aalborg (DK); LARSEN, Poul, Brinch, DK-9000 Aalborg (DK)
(74) Representative: Wittrup, Flemming
(86) International application number: DK9100114
(87) International publication number: WO9117607

(56) References cited:
- GB-A- 2 214 386
- US-A- 4 430 743
- US-A- 4 441 192
- US-A- 4 571 733
- US-A- 4 694 469
- US-A- 4 701 936

## Description

### A method of equalization in a receiver of signals having passed a transmission channel

The invention concerns a method of equalization for use in a receiver for electromagnetic signals having passed a transmission channel. The equalization is of the type where the received signals are passed to a first series connection of a plurality of time delay elements which are connected to a common summation point in accordance with a first set of respective weight factors to produce an output signal. This output signal is passed to a second series connection of a plurality of time delay elements which are correspondingly connected to said summation point in accordance with a second set of respective weight factors.

When communicating over a mobile channel, such as e.g. in a modern mobile telephone system, the signal between transmitter and receiver is subjected to various forms of amplitude and phase influences. The influence most interesting in this connection is the one occuring because of multipath propagation of the transmitted signal. The receiver receives various contributions which have traversed various transmission paths, and these contributions interfere destructively or constructively depending upon the frequency. When the mobile unit moves, big fluctuations will therefore occur in the received power. When digital signals are transmitted, and when the delay caused by the multipath propagation is greater than the symbol time, i.e. the time between each information bit, the individual bits will moreover interfere with each other.

This is called intersymbol interference (ISI). To compensate this it is necessary to use an equalizer in the receiver.

The transmitted data often include a so-called training sequence, i.e. a bit pattern, which is known in advance by the receiver. When the received signals are compared with the expected ones, the momentary impulse response of the channel will be known.

Compensation can be performed in two different ways with the prior art.

In one method no equalization proper of the received signal takes place. Instead, the method relies on the data receiver knowing all possible data sequences and being capable of calculating all possible distorted signals with its knowledge about the momentary impulse response of the channel and then selecting the one which is the best match of the signal just received. This type is called Maximum Likelihood Sequence Estimator (MLSE).

In contrast, the second method relies on equalization of the received signal, i.e. the influence of the transmission channel on the signal is equalized, following which the data information is estimated in a simple detector. Feedback of the estimated data frequently takes place in the equalizer, and this type is called Decision Feedback Equalizer (DFE). A DFE equalizer is composed of i.a. two main blocks, viz. a feedforward part and a feedback part. Each of these comprises a series connection of a plurality of delay elements whose delay corresponds to the symbol time, i.e. the time between each information bit so that a data sequence can be shifted through the chain. The received data sequence is used as an input signal for the feedforward part, while the corresponding detected sequence is used for the feedback part. The momentary output signal from each delay element in both the feedforward part and the feedback part is multiplied by a weight factor or coefficient and is passed to a common summation point, which is in turn connected to a detector. Generally, these equalizers are adaptive, i.e. they currently adapt to the momentary impulse response of the channel so that the distortion of the channel is equalized. This takes place by current adjustment of the weight factors.

Such equalizers of the DFE type are known from i.a. the European Patent Publication 323 870.

However, tests with DFE have so far given disappointing results in comparison with MLSE receivers, presumably because they do not have time to converge sufficiently rapidly. On the other hand, the MLSE receivers require much more calculation and are thus more expensive with respect to development as well as production than DFE receivers.

In a receiver disclosed in US A 4 694 469 a synchronizing circuit with two series coupled filters is used. The filter coefficients of the first filter are initiated in accordance with a complex conjugated estimate of the impulse response of the channel, while the autocorrelation is used in the second filter. A similar circuit is known from US A 4 571 733.

From US A 4 701 936 it is known to calculate an estimate of the impulse response of the channel in a DFE-equalizer and to use this estimate to calculate the filter coefficients. However, this has not changed the relation between DFE and MLSE receivers.

The object of the invention is to provide an equalizer of the DFE type which has a performance of the same order as the one obtainable with MLSE receivers.

This object is achieved by selecting a complex conjugated estimate of the impulse response of the channel as start conditions for the first set of weight factors or tap coefficients. An estimate of the impulse response of the transmission channel, expressed by a plurality of filter coefficients, can be calculated in a simple manner by means of the known training sequence, and an optimum solution with respect to noise is obtained by complex conjugating these and then using them as start values for the coefficients in the feedforward part, i.e. the first series connection of a plurality of time delay elements. These coefficients correspond to those used in a so-called matched filter, i.e. a filter whose impulse response is adapted to the transmission channel to provide a maximum signal/noise ratio on the output.

When additionally generating the autocorrelation of the estimate of the channel impulse response, likewise expressed by a plurality of filter coefficients, and using these as start values for the coefficients in the feedback part, i.e. the second series connection of a plurality of delay elements, intersymbol interference originating from symbols i.e. information bits, detected previously, will be removed.

Since the mentioned training sequence will typically be positioned in the center of a databit sequence, the best result is obtained by performing the detection from the center and outwardly, as stated in claim 2, instead of following the order in which the bits are received.

To ensure synchronism with the transmitted signal, the synchronization time is determined by means of the estimate of the channel impulse response, as appears from claims 3, 4 and 5.

Likewise, it may be necessary to phase or frequency adjust the received signal according to claim 6 before the actual detection takes place.

In a particular embodiment the method is used in an equalizer adapted for use in receivers for the new common European digital mobile telephone system called GSM.

The invention will be explained more fully below with reference to the drawing, in which
fig. 1 shows an example of the structure of a transmitter/ receiver known per se for a digital mobile telephone system,
fig. 2 shows a block diagram of a known equalizer of the DFE type,
fig. 3 shows the structure and mode of operation of the feedforward part,
fig. 4 is an example of a simple embodiment of a detector circuit incorporated in the equalizer,
fig. 5 shows the structure of the feedback part,
fig. 6 shows a block diagram of a DFE equalizer provided with a channel estimator,
fig. 7 shows the structure of the channel estimator block,
fig. 8 shows a block diagram of a DFE equalizer with phase of frequency adjustment,
fig. 9 shows an example of the structure of a reconstruction filter,
fig. 10 shows a delay block,
fig. 11 shows a phase adapter unit, and
fig. 12 shows the mode of operation of a phase shifter.

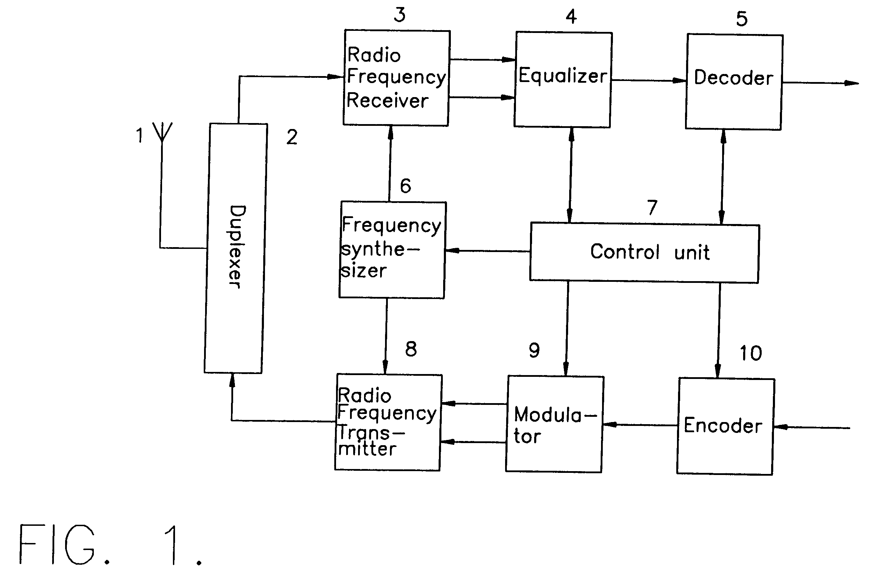

Fig. 1 shows an example known per se of a transmitter/receiver for a digital mobile telephone system - e.g. the common European digital mobile telephone system called GSM - in which the method of the invention can be used.

A signal is received on an antenna 1 and is passed to a duplexer 2, following which it is amplified and band restricted in the high frequency receiver 3. The signal on its output is complex, the real part being called the I-component (Inphase) and the imaginary part being called the Q-component (Quadrature). The complex signal is digitized before being passed further on to the input on the equalizer 4, which will be described more fully below. The output of the equalizer 4 includes the detected signal which is passed on for further processing, which can typically take place in a decoder 5. Further, frequency synthesis 6, control unit 7 as well as the transmitter circuit 8, 9 and 10 are incorporated.

Such a transmitter/receiver is described more fully in e.g. the International Publication WO 87/06083.

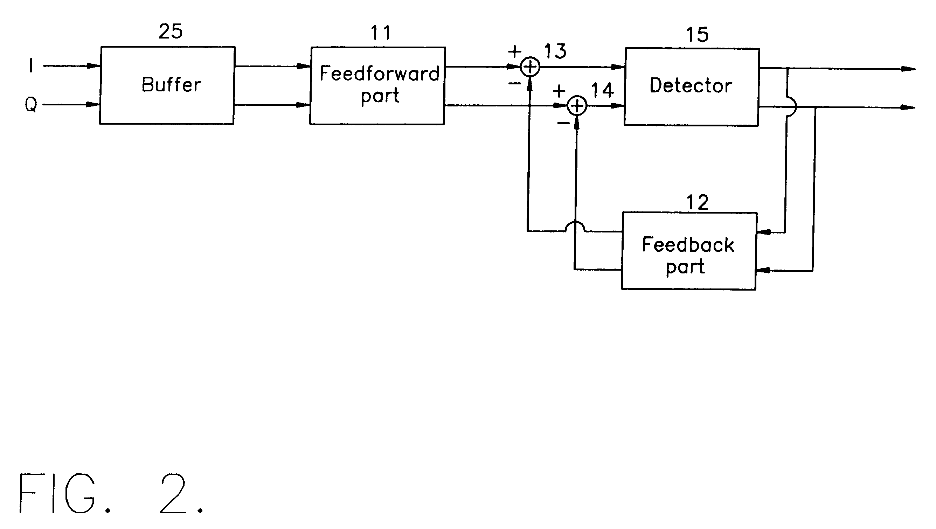

The equalizer 4 may e.g. be of the DFE type, and fig. 2 shows in a block diagram how such an equalizer may be constructed in a known manner. The DFE equalizer comprises a buffer 25, a feedforward part 11, a feedback part 12, the summation points 13, 14 and a detector 15, and these blocks will be described more fully below. The signal from the buffer is passed to the feedforward part 11, and the output signal from this is passed to the summation points 13 and 14 (for the real and the imaginary parts, respectively), where the output signal from the feedback part 12 is subtracted. The signal is passed from the summation points 13 and 14 to the detector 15, which may be a comparator in its simplest form, and the output signal from this consists of the detected bits. This signal is passed partly to the feedback part 12 and partly to subsequent circuits outside the equalizer.

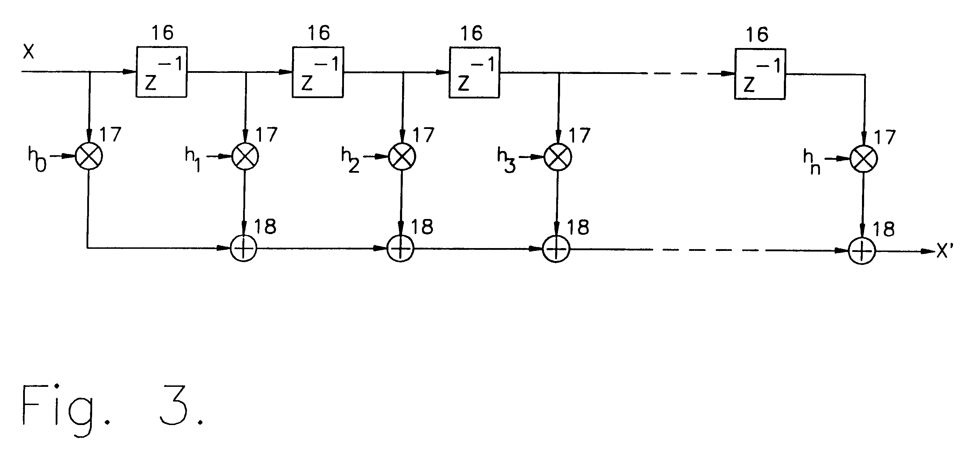

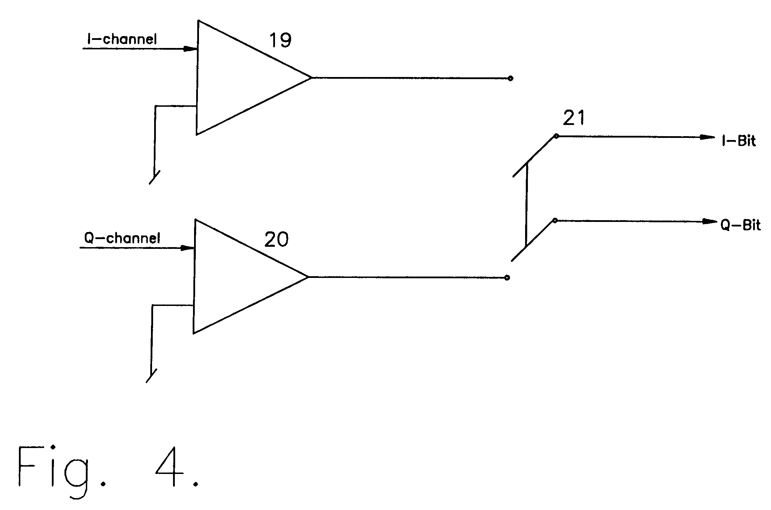

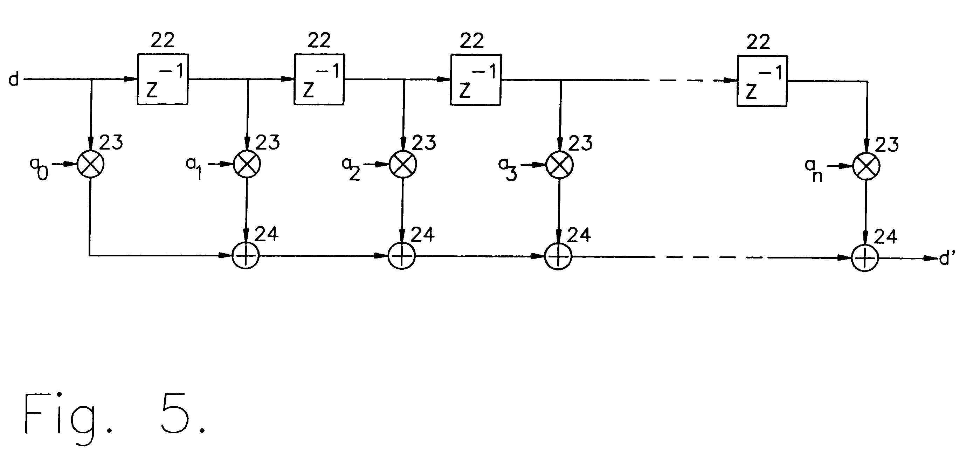

The structure of the feedforward part 11, the detector 15 and the feedback part 12 is described below with reference to figs. 3, 4 and 5.

Fig. 3 shows the structure of the feedforward part. The input signal X is the received data sequence which is stored in the buffer 25. The signal is passed through a plurality of delay elements 16, following which each of the delayed signal values is multiplied by an associated filter coefficient in the multiplication points 17 and is summed in the summation points 18. A common summation point may also be used, as mentioned before. All signals are complex. The output X′ is passed to the summation points 13 and 14 (for the real and the imaginary parts, respectively).

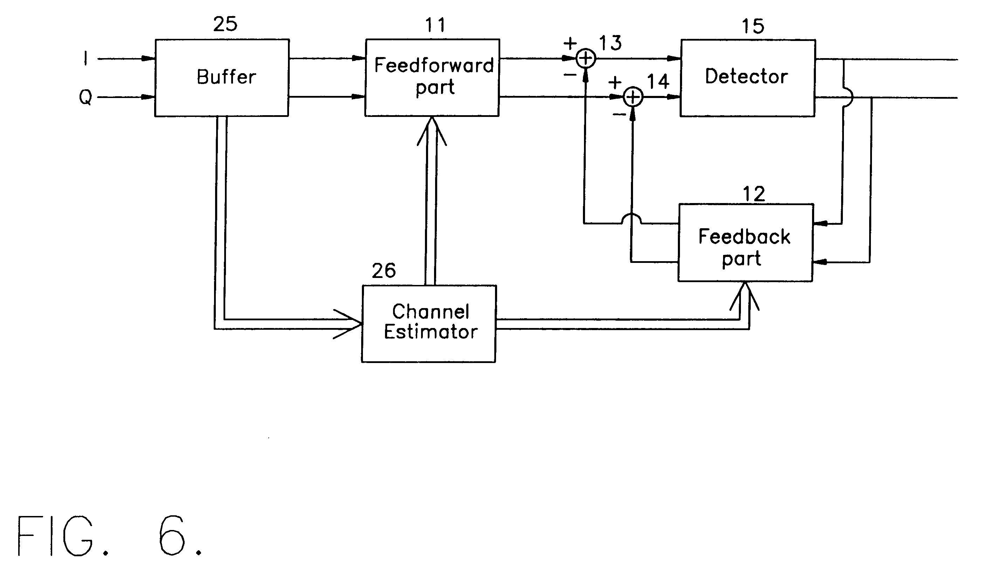

Fig. 4 shows a simple embodiment of the detector 15, realized by means of two zero comparators 19, 20 which alternately scan the I- and Q-components, respectively, as well as a switch 21. The output signal is +1 if the scanned value is greater than or equal to 0, and -1 if it is less than 0. Correspondingly, the value is purely real if scanned in the I-channel, and purely imaginary if scanned in the Q-channel.

The detector may also be more sophisticated. The equalizer of the DFE type per se can just equalize intersymbol interference from data bits already detected. When using a more sophisticated detector, e.g. a Viterbi detector allowance can also be made for intersymbol interference from subsequent data bits.

Fig. 5 shows the structure of the feedback part. The structure corresponds to the feedforward part, incorporating a plurality of delay elements 22, a plurality of multiplication points 23 and the summation points 24. The input signal a is the sequence just detected.

If the equalizer is adaptive, the coefficients will be adjusted currently. This takes place by first selecting a set of start values or start conditions for each of the complex coefficients. Typically, they are all set to zero, except the real part of one of the coefficients, the so-called main coefficient (main tap) which is set to 1. Then the received training sequence is run through the equalizer, and a comparison with the known training sequence gives an error signal which forms the basis for updating of the coefficients. This procedure can then be repeated until convergence is obtained. However, as mentioned before, it has been found that the equalizer cannot converge sufficiently rapidly in this manner for the desired results to be obtained.

The novelty according to the invention is that the start values of the coefficients for the multiplication points 17 in the feedforward part and the coefficients for the multiplication points 23 in the feedback part are selected in a new manner based upon an estimate of the impulse response of the transmission channel, expressed by a plurality of filter coefficients, it being possible to generate such an estimate in a simple manner known per se by means of a channel estimator.

When using these start estimates it is possible to achieve much better results than before, in particular with low signal/noise ratios. Actually, it has surprisingly been found that if the start coefficients are selected in this manner for each received data bit sequence, no additional improvement is achieved by current updating of the coefficients. With low signal/noise ratios (poor receiving conditions) it may even be an advantage not to update the coefficients. This means that the equalizer does not have to be adaptive, which is extremely advantageous with respect to the complexity of the equalizer.

In fig. 6 the DFE equalizer from fig. 2 is therefore equipped with a channel estimator 26. The complex signal received from the high frequency receiver 3 is first passed to the buffer 25, which can store the signal for a given period of time, i.e. store a sequence of a given length. In the GSM system, each received data sequence contains a training sequence, and as soon as this is stored in the buffer, the channel estimator 26 can begin estimating the impulse response of the transmission channel expressed by a plurality of filter coefficients. This will be described more fully below. In the GSM system, the impulse response of the channel comprises contributions from the modulation, transmitter filters, the physical transmission channel and receiver filters.

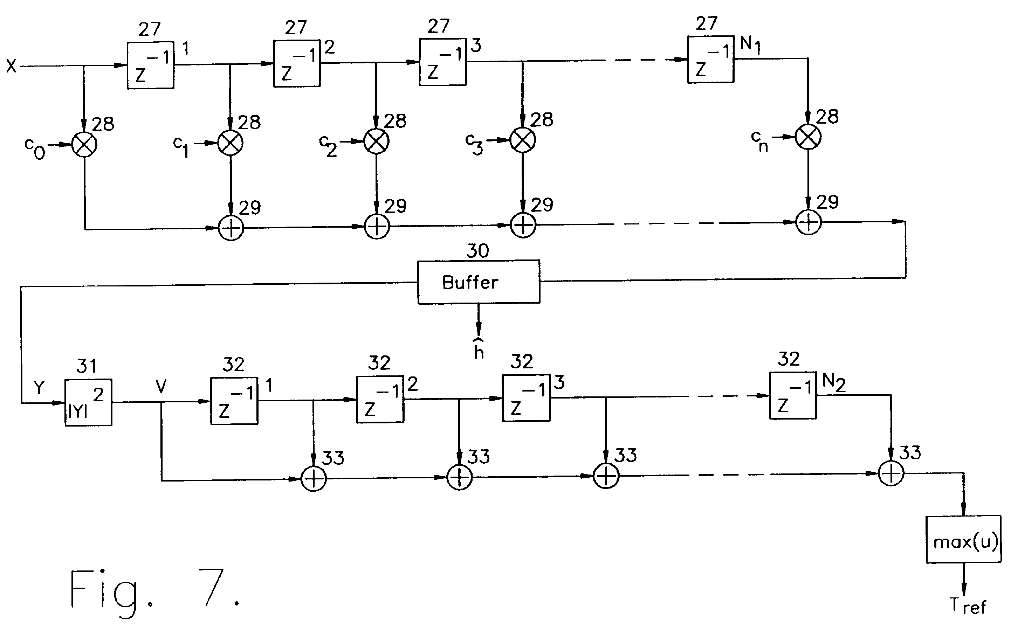

Fig. 7 shows how the channel estimator 26 may be constructed. The input signal X is the received training sequence which forms part of the received data sequence stored in the buffer 25. Each element in the received sequence is a complex figure and thus consists of a real part and an imaginary part. A plurality of delay elements 27 (Z⁻¹), a plurality of coefficients 28 (Cn) and a plurality of summation points 29 serve to determine the cross correlation between the training sequence actually received and the known training sequence, the latter being identical with the training sequence transmitted from the transmitter. The result is a sequence Y of correlation values which are stored in the buffer 30. Part of this sequence may be sampled as the estimate (h) of the impulse response of the channel which is used in the feedforward part 11 according to the invention.

This part is sampled according to a principle where a window is moved over all correlation values, and the energy of the incorporated correlation values is calculated for each position. This takes place in that the sequence Y is passed to a block 31 which calculates the square norm of the complex values. This gives the sequence V which is passed to a plurality of delay elements 32, the number of which corresponds to the length of the window. The sum of the square norms belonging to the window is obtained by means of the summation points 33, which corresponds to the energy of the correlation calculated over the window length. The block 34 measuring maximum value finds the window having the greatest content of energy and stores its number, i.e. the time of its beginning or the reference time, Tref. It is the correlation values in this window which are used as the estimate of the impulse response of the channel.

According to an alternative embodiment the method of selecting the estimate of the impulse response of the channel may be varied. After the window with maximum energy has been found, it is scanned to find the correlation value in the window having the greatest square norm, i.e. maximum amplitude. Then a new window of the correlation is sampled, which is placed symmetrically around the new reference time, and it is then the correlation values in this which are used as an estimate of the impulse response of the channel.

In both cases the found reference time is passed to the control unit 7 of the apparatus for synchronization.

The start conditions of the coefficients 17 (feedforward part) and 23 (feedback part) may now be generated with the reproduced estimate of the impulse response of the channel as the basis.

The coefficients 17 in the feedforward part are produced according to the invention by complex conjugating (and time reversing) the values which were sampled in the channel estimator as an estimate of the impulse response of the channel.

The coefficients of the feedback part are produced according to the invention as part of the impulse response of the channel folded with the impulse response of the feedforward part and thereby as the autocorrelation of the impulse response of the channel. This is achieved by passing the estimate values of the window from the correlation buffer through the feedforward part (or an identical circuit). Only the part of the autocorrelation is used which corresponds to the rest after the time delay of the feedforward part has been considered, so as to obtain correct time synchronism between the two signals in the summation points 13 and 14.

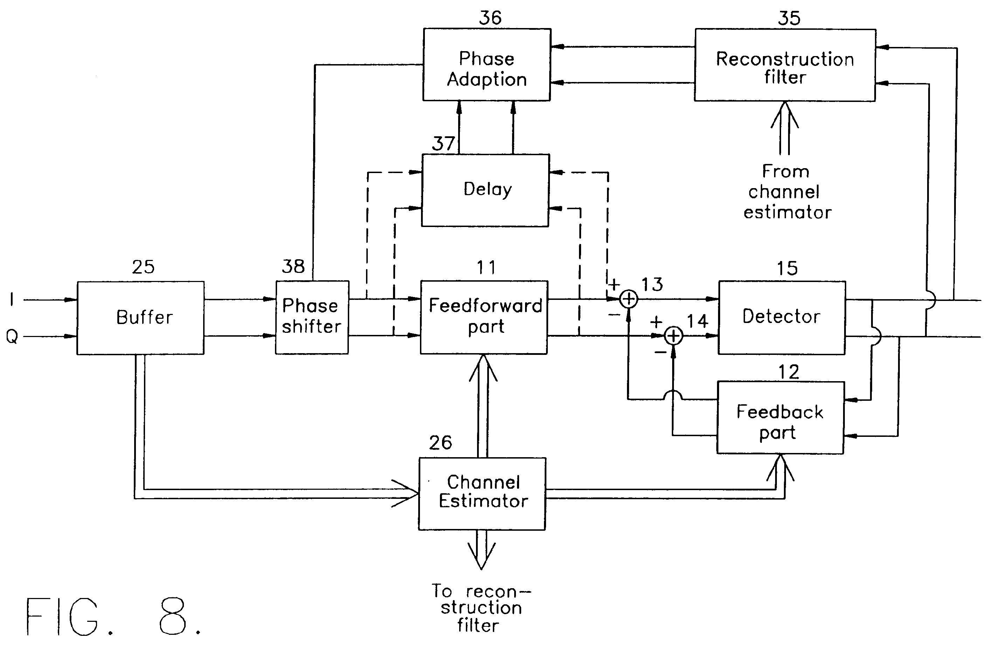

It is also possible to phase or frequency adjust the received signal prior to detection by means of the estimate of the channel impulse response produced in the channel estimator 26. Fig. 8 shows how the equalizer from fig. 6 can be equipped with a function for synchronization of reference frequency. This takes place by detecting and correcting a phase error. The output signal from the detector 15 is passed to a reconstruction filter 35 which reconstructs a signal corresponding to the signal either before or after the feedforward part by means of information from the channel estimator 26. The reconstructed signal is then compared with the actual signal in the phase adapter unit 36. Since the reconstructed signal is based on detected values, it will be time delayed, so that the actual signal must be time delayed correspondingly in the time delay link 37 before being passed to the phase adapter unit 36. The phase difference between the two signals is calculated here. The result of this is passed to the phase shifter 38 where the received signal is phase shifted accordingly. Since the system is linear, the phase shifter 38 may be positioned either immediately before (as shown) or immediately after the feedforward part.

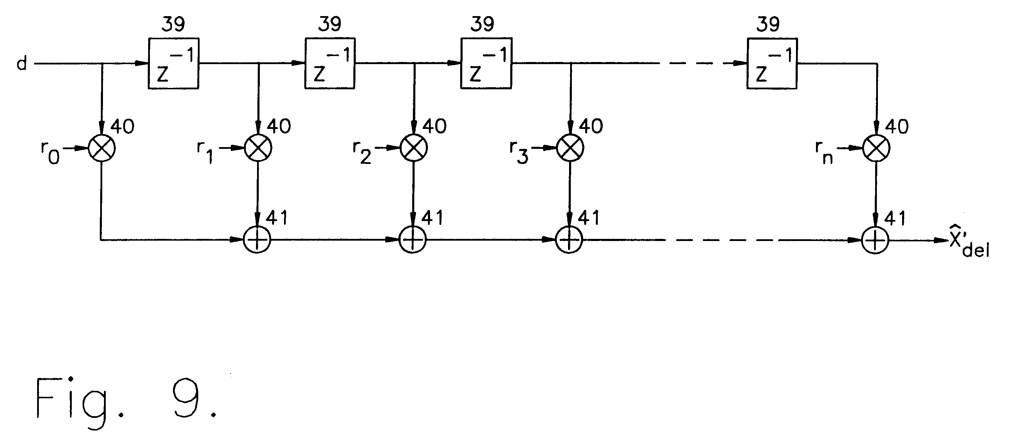

Figs. 9-12 shows the extra blocks which are used in the embodiment from fig. 8 for phase or frequency correction.

Fig. 9 shows the reconstruction filter which is also composed of delay elements 39, coefficients 40 and summation points 41. As mentioned, the reconstructed signal can correspond to the signal either before or after the feedforward part. If the signal is used before, the impulse response of the reconstruction filter must correspond to the estimate of the impulse response of the channel which is readily accessible in the channel estimator. If the signal is used after the feedforward part, the impulse response of the reconstruction filter must correspond to the impulse response of the channel folded with the impulse response of the feedforward part, which corresponds to the autocorrelation of the estimate, as mentioned before.

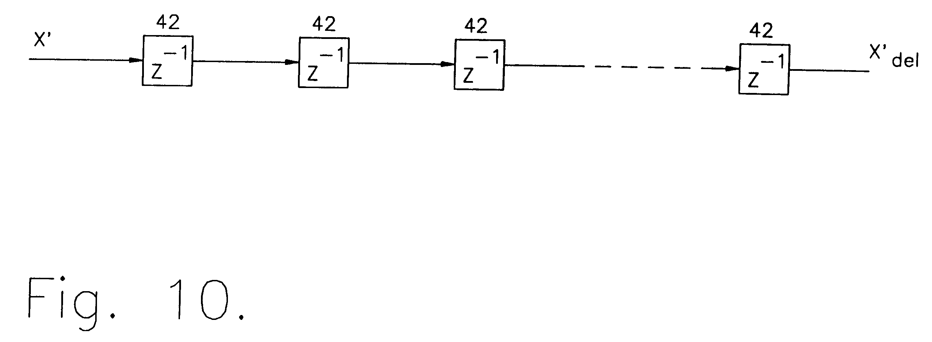

Fig. 10 shows the delay block consisting of a shift register composed of a plurality of time delay elements 42, which contain time delayed values of the complex input signal. The maximum delay in the block is selected in consideration of the reconstruction filter 35 so as to obtain time synchronism in the phase adapter unit 36. As mentioned, the input signal can be sampled either immediately before or immediately after the feedforward part.

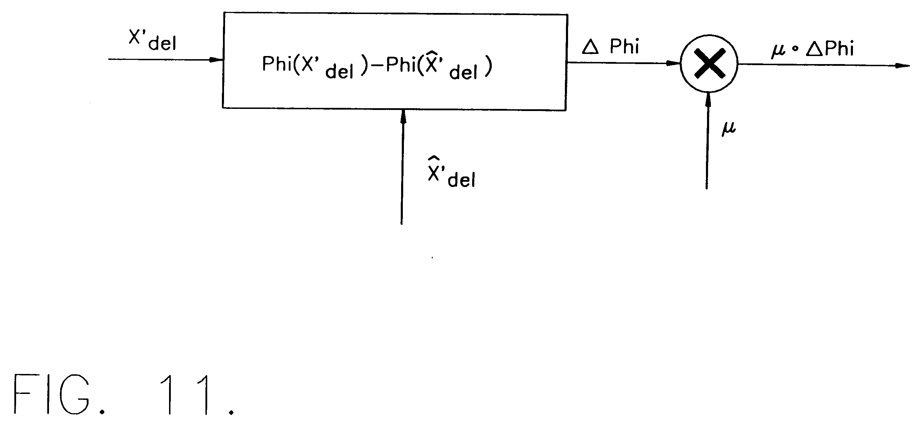

Fig. 11 shows the phase adapter unit determining the phase adaptation on the basis of the phase difference between the output signal from the reconstruction filter and the output signal from the delay block using a phase adaptation constant (µ). The result is a signal which signals whether the phase is to be increased or diminished, and which is passed to the phase shifter.

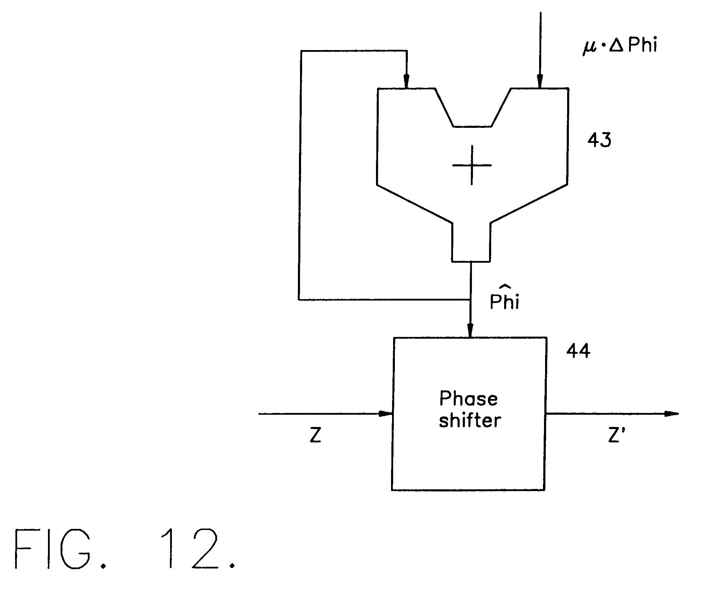

Fig. 12 shows the phase shifter which accumulates and averages the values in 43 which are received from the phase adapter unit. The output signal is the input signal received from the buffer, phase shifted in accordance with the accumulated phase value. The actual phase shift takes place in the block 44. The sign of the values received from the phase adapter unit is determined by whether the detection takes place from the center of the stored sequence towards its beginning (rearwards) or from the center towards the end.

## Claims

1. A method of equalization in a receiver of signals having passed a transmission channel, said signals being passed to a first series connection of a plurality of time delay elements (16) connected to a common summation point (18, 23) in accordance with a first set of respective weight factors to produce an output signal, which is passed through a detector circuit to a second series connection of a plurality of time delay elements connected back to said summation point (18, 23) in accordance with a second set of respective weight factors, and an estimate of the impulse response of the channel being produced, **characterized** by initiating the first set of weight factors in accordance with a complex conjugated estimate of the impulse response of the channel, and by initiating the second set of weight factors in accordance with the autocorrelation of an estimate of the impulse response of the channel.

2. A method according to claim 1, wherein the transmitted signals are composed of short data bit sequences, and each data bit sequence comprises a subsequence which is known in advance by the receiver and which is so positioned in the data bit sequence in terms of time that it follows and is followed by a plurality of data bits, **characterized** by receiving and storing a whole data bit sequence before equalization and detection take place, and initiating equalization and detection in connection with adaptive updating of the weight factors at the known subsequence, said equalization and detection then proceeding away from said known subsequence until the entire sequence has been detected.

3. A method according to claim 1, **characterized** by time synchronizing the equalization to the received bit stream.

4. A method according to claim 3, **characterized** by selecting a window, having a suitable length, of the complex impulse response estimate so that said window has a maximum content of energy, and using said window for synchronization.

5. A method according to claim 3 or 4, **characterized** by synchronizing the equalization by determining the time corresponding to the maximum amplitude of the impulse response estimate or a window thereof.

6. A method according to claim 1, **characterized** by performing phase or frequency adjustment of the received signal prior to the actual detection thereof.

## Patentansprüche

1. Entzerrungsverfahren in einem Empfänger für Signale, die einen Übertragungskanal durchlaufen haben, bei dem die Signale in eine erste Reihenschaltung einer Vielzahl von gemäß einem ersten Satz jeweiliger Gewichtungsfaktoren mit einem gemeinsamen Summationspunkt (18, 23) verbundenen Zeitverzögerungselementen (16) geführt werden, um ein Ausgangssignal zu erzeugen, welches durch eine Detektorschaltung in eine zweite Reihenschaltung einer Vielzahl von gemäß einem zweiten Satz von jeweiligen Gewichtungsfaktoren mit dem Summationspunkt (18, 23) zurückverbundenen Zeitverzögerungselementen geführt wird, und wobei eine Schätzung der Impulsantwort des Kanals erzeugt wird, gekennzeichnet durch das Initiieren des ersten Satzes von Gewichtungsfaktoren gemäß einer komplex konjugierten Schätzung der Impulsantwort des Kanals und durch Initiieren des zweiten Satzes von Gewichtungsfaktoren gemäß der Autokorrelation einer Schätzung der Impulsantwort des Kanals.

2. Verfahren gemäß Anspruch 1, bei dem die übertragenen Signale aus kurzen Folgen von Datenbits bestehen und jede Folge von Datenbits eine Unterfolge umfaßt, welche dem Empfänger im Voraus bekannt ist und welche in der Folge der Datenbits zeitlich so angeordnet ist, daß sie einer Vielzahl von Datenbits folgt und von einer Vielzahl von Datenbits gefolgt wird, gekennzeichnet durch Empfang und Speicherung einer ganzen Folge von Datenbits, bevor Entzerrung und Detektion stattfinden, und durch das Initiieren von Entzerrung und Detektion in Verbindung mit adaptiver Aktualisierung der Gewichtungsfaktoren bei der bekannten Unterfolge, wobei Entzerrung und Detektion dann von der Unterfolge aus weitergehen, bis die gesamte Folge detektiert worden ist.

3. Verfahren gemäß Anspruch 1, gekennzeichnet durch zeitliches Synchronisieren der Entzerrung mit dem empfangenen Bitstrom.

4. Verfahren gemäß Anspruch 3, gekennzeichnet durch Auswählen eines Fensters der komplexen Schätzung der Impulsantwort mit geeigneter Länge, so daß das Fenster einen maximalen Energieinhalt hat, und durch Verwendung des Fensters zur Synchronisierung.

5. Verfahren gemäß Anspruch 3 oder 4, gekennzeichnet durch Synchronisierung der Entzerrung durch Bestimmen der Zeit, welche der maximalen Amplitude der Schätzung der Impulsantwort oder deren Fenster entspricht.

6. Verfahren gemäß Anspruch 1, gekennzeichnet durch das Ausführen einer Phasen- oder Frequenzanpassung des empfangenen Signals vor dessen tatsächlicher Detektion.

## Revendications

1. Procédé d'égalisation dans un récepteur de signaux ayant passé un canal de transmission, lesdits signaux étant passés à une première connexion de série d'une pluralité d'éléments de retard (16) connectés à un point de sommation commun (18, 23) en fonction d'un premier jeu de facteurs de pondération respectifs pour produire un signal de sortie qui est passé à travers un circuit détecteur vers une deuxième connexion de série d'une pluralité d'éléments de retard connectés en retour audit point de sommation (18, 23) en fonction d'un deuxième jeu de facteurs de pondération respectifs, et une estimation de la réponse d'impulsion du canal étant établie, caractérisé par l'initialisation du premier jeu de facteurs de pondération en fonction d'une estimation conjuguée complexe de la réponse d'impulsion du canal et par l'initialisation du deuxième jeu de facteurs de pondération en fonction de l'auto-corrélation d'une estimation de la réponse d'impulsion du canal.

2. Procédé selon la revendication 1, dans lequel les signaux transmis sont constitués par des séquences courtes de bits de données, chaque séquence de bits de données comportant une sous-séquence qui est connue à l'avance par le récepteur, qui est ainsi positionnée dans la séquence de bits de données, en terme de temps, de manière qu'elle suit et qu'elle est suivie par une pluralité de bits de données, caractérisé par la réception et le stockage d'une séquence entière de bits de données avant que l'égalisation et la détection n'aient lieu, et l'initialisation d'une égalisation et d'une détection en rapport avec une actualisation adaptative des facteurs de pondération dans la sous-séquence connue, lesdites égalisation et détection se poursuivant au-delà de ladite sous-séquence connue jusqu'à ce que la séquence entière ait été détectée.

3. Procédé selon la revendication 1, caractérisé par la synchronisation dans le temps de l'égalisation au flux de bits reçu.

4. Procédé selon la revendication 3, caractérisé par la sélection d'une fenêtre, ayant une longueur appropriée de l'estimation de réponse d'impulsion complexe de telle sorte que ladite fenêtre ait un contenu maximum d'énergie, et en utilisant ladite fenêtre pour la synchronisation.

5. Procédé selon les revendications 3 ou 4, caractérisé par la synchronisation de l'égalisation en déterminant le temps correspondant à l'amplitude maximum de l'estimation de réponse d'impulsion ou une fenêtre correspondante.

6. Procédé selon la revendication 1, caractérisé par un réglage de phase ou de fréquence du signal reçu avant la détection effective de ce signal.
